# EUROPEAN PATENT SPECIFICATION

(11) **EP 3 236 594 B1**
(45) Date of publication and mention of the grant of the patent: **17.07.2019**
(21) Application number: 17167100.1
(22) Date of filing: 19.04.2017
(51) Int. Cl.: H04B 7/06, H04B 7/08, H04B 10/116

(54) **RADIO CONNECTION SETUP**
FUNKVERBINDUNGSEINRICHTUNG
ÉTABLISSEMENT D'UNE CONNEXION RADIO

(30) Priority: 19.04.2016 EP 16165987
(43) Date of publication of application: 25.10.2017
(73) Proprietor: IPCom GmbH & Co. KG, 82049 Pullach (DE)
(72) Inventor: SCHMIDT, Andreas, 38124 Braunschweig (DE); LUFT, Achim, 38118 Braunschweig (DE); BIENAS, Maik, 38170 Schöppenstedt (DE); HANS, Martin, 31162 Bad Salzdetfurth (DE)
(74) Representative: Tomlinson, Edward James

(56) References cited:
- WO-A1-2015/051855
- US-B2- 8 942 564

## Description

The present invention relates to the setting up of a radio connection between a transmitter and a receiver.

Wireless radio communication enables mobility and flexibility at low cost. Radio waves travel freely through the air. No line of sight is needed, and bandwidth availability is more than sufficient for most of the different communication types; e.g. vehicular machine-to-machine type communication. For many communication types (e.g. vehicle to vehicle, V2V) there is no alternative to communicating wirelessly. Wireless connections are convenient and productive.

Visual light communication (VLC) is used in scenarios where a line of sight is guaranteed or even an opportunity in terms of determination of the position of a sender. Visual light communication can be modulated in electric lightning such as road lightning.

The system throughput in wireless radio communication can be increased by forming the direction of the radio beam towards sender and receiver. In communication systems using massive MIMO (multiple input multiple output) large directive antenna arrays at each transceiver (transmitter and receiver) are used to achieve the so called beam forming. Technically this is implemented by adjusting the phase of each single antenna of the array individually in order to get a lobe effect for the whole array. An antenna array with lobe effect is called directive array. When compared with mobile phones, vehicles are much better suited for deployment of directive antenna technology because of their larger dimensions and limited angular velocity.

Security principles in any kind of communication are confidentiality, integrity and availability. In mobile communication non-traceability and privacy are additional security principles. In secure vehicle-to-vehicle (V2V) communication digital certificates are used to protect all these security principals. For privacy and non-traceability reasons thousands of digitally signed certificates are pre-installed in vehicles communicating e.g. via dedicated short range communication (DSRC). The certificate that is sent from one vehicle to another is changed every few minutes. The received certificate has to be validated by the receiving vehicle using a root certificate (containing the public key of a certification authority). The radio connection between two vehicles is terminated immediately after determining that a certificate is not valid or the owners are not authorized to communicate with each other.

When wave energy like radio waves travels from two objects, the wavelength can seem to be changed if one or both of them are moving. This is called the Doppler effect. When the distance between sender and receiver is decreasing, the frequency of the received wave form will be higher than the source wave form.

When electromagnetic waves like cellular radio signals or visual light and transmitter and receiver have a relative speed with respect to each other, the Doppler effect will influence the signals. That is, the wavelength (or colour) of the received signal is different form the one, the send actually generated (Doppler shift).

Typical radio wave receivers are sensitive towards Doppler Shift. There are hardware and/or software solutions build in every cellular receiver to adapt the reception to the estimated Doppler Shift. However, these solutions are limited in the frequency shift they can successfully eliminate, thus radio transmission systems may be limited by Doppler Shift, i.e. by relative speed between transmitter and receiver.

Visual light receivers are less sensitive to Doppler shift as they are typically not fixed to a small frequency band to receive.

An example of the Doppler effect can be observed in V2V communication, where oncoming traffic has to deal with the worst possible conditions with respect to relative speed. Reliability could be increased by means of redundancy; on the other hand, redundancy leads to lower data rates. The available time for communication is at its minimum. Therefore, the data rate has to be sufficient to transmit all information in the given timeframe.

In mobile communication, beam forming is one means to increase communication coverage and bandwidth. The direction for beam forming towards the peer transceiver is not known during connection establishment and has to be estimated and adopted periodically during the communication. Thus a time consuming start phase for establishment of beam forming based communication make deployment of the feature difficult for vehicle communication.

In order to protect a communication via digital certificates the following steps have to be performed:
The radio connection has to be established between non-authenticated transceivers.
The certificates have to be exchanged between the two peer entities.
The digital signature of a certification authority (CA) in the certificate of the transmitter has to be validated in the receiver using the public key of the CA. The sender is authenticated by this certificate.
In case the communication is authorized between two or more authenticated transceivers, security context can be established from this point in time onwards extracting the public key of the other transmitter from a valid certificate and establish a secure connection; e.g. derive a symmetric key for encryption.

US 8,942,564 describes a user equipment (UE) device having a VLC receiver and a radio receiver. The UE device may be arranged to use information determined from a VLC signal to configure the radio receiver. No provision is included for generating information relating to a location of an origin of VLC signal.

US 9,143,230 describes a supplementary VLC downlink in combination with a wireless radio downlink/uplink pair. A UE device receives downlink VLC traffic signals and transmits a corresponding acknowledgement signal via an uplink radio channel. The visual light communication does not influence any parameters or characteristic of the radio link.

The present invention provides a method of establishing a radio communication connection between a first device and a second device, wherein the method comprises the first device transmitting an optical signal including radio communication parameters and the second device deriving, in addition to said communication parameters, directional information from said optical signal, the directional information being used to generate parameters to control a directional radio communication between the first device and the second device.

The invention also provides a vehicle including an optical signal receiving device and a radio communication user equipment device, wherein the optical signal receiving device is arranged to receive a transmitted optical signal and to derive directional information from the received optical signal, and wherein the vehicle is arranged to use the directional information to generate parameters to control a directional radio communication between the vehicle and a device transmitting the optical signal.

In a further aspect, the invention provides a method of establishing a radio communication connection between a first device and a second device, wherein the method comprises the first device and the second device exchanging optical signals, the optical signals including authentication information and wherein a secure radio connection is established using the authentication information.

The connection establishment for wireless radio communication is supported by preceding visual light communication (VLC). The beneficial characteristics of a VLC connection - such as line-of-sight and lower impact of the Doppler effect - are used to
filter radio connections before establishment (e.g., down select potential peers for wireless communication),
authenticate entities before wireless connection establishment and prepare / optimize the radio connection e.g. via determination of the direction for beam forming.

The position of a sender using VLC can easily be determined, e.g. if the receiver is a camera-like device the position is given in the picture and if it is an array of sensors with a narrow-angle receive characteristic, at least the angle is well determined. Therefore, the parameters of a radio connection that is going to be established subsequent to a VLC connection (e.g. parameters for beam forming) can be set before the connection establishment is performed and without measurements during the communication.

Parameters related to the radio communication, for example an ID (e.g. the digital certificate used for protection of a V2V communication), can be transmitted via VLC even before the radio communication starts (i.e. before the wireless connection is established). This increases the time available for the radio communication. So more information can be exchanged or more redundancy can be added to the radio communication in order to increase the reliability of the radio connection.

Alternatively, for example in a V2V environment, it would also be possible to use VLC to indicate a change of the sender's certificate during an ongoing radio connection thereby assisting the receiver to update the security settings of the wireless link much faster.

Depending on the nature of the VLC sender (e.g. headlights or tail/brake lights) and the nature of the VLC receiver (e.g. dashboard camera or rear view camera) the radio connection can be used to restrict transmission of information to the peer entity (i.e. only information relevant for the respective recipient is sent in the appropriate direction). If, for example, VLC is modulated to the headlights of a vehicle and received by a dashboard sensor of another vehicle, VLC can be used as a filter for connection establishment of a radio communication dedicated to oncoming vehicles only. Therefore, the type or position of the transmitter (e.g. headlight or tail/brake light) is coded in the respective VLC signal.

Embodiments of the invention will now be described, by way of example only, with reference to the accompanying drawings in which
Fig. 1 shows two oncoming vehicles using beam forming for a radio communication between the vehicles, controlled by an optical signal;
Fig. 2 shows an example message sequence chart for controlling a directional transmission;
Fig. 3 shows an example of vehicle to vehicle communication between vehicles travelling in a common direction;
Fig. 4 shows an example message sequence chart in which an optical signal is used to filter a radio communication;
Fig. 5 shows an example of an emergency vehicle using an optical signal; and
Fig. 6 shows an example message sequence chart in which an optical signal is used to convey data.

In a first embodiment of the invention, two oncoming vehicles are involved with a VLC sender in a first vehicle (modulating, for example, a VLC signal on the headlights of said first vehicle) and a VLC receiver (for example, a dedicated VLC sensor mounted on a rear view mirror in driving direction and a second VLC sensor mounted on a rear screen of the vehicle) in a second vehicle. The VLC technology is used to determine the direction (or angle) from each vehicle to the other. This direction (or angle) is then used to calculate a phase shift of each antenna in a massive MIMO antenna array installed in each vehicle for radio communication before the radio connection is established.

In order to detect a direction to a vehicle emitting a VLC signal, the receiver incorporates a camera-like arrangement with an array of sensors, each with a narrow-angle receive characteristic. The sensor detecting the signal thus provides information as to the direction of the transmitter. This directional information is then used to set parameters of a radio connection that is going to be established subsequent to a VLC connection (e.g. parameters for beam forming) before the connection establishment is performed. The directional information may be updated during the course of a communication if necessary.

For a vehicle adapted to drive autonomously which includes an optical sensing arrangement to determine an environment surrounding the vehicle, this sensing arrangement may also be used to detect VLC signals and determine a direction from which they originate.

If a front facing VLC receiver detects a VLC signal from a headlight transmitter, the beam is directed towards the oncoming traffic lane. If a rear facing VLC receiver detects a signal from a headlight transmitter, the radio beam is directed to the back of the vehicle. Further examples are listed in table 1.

**Table 1**

| | Headlight VLC transmitter | Tail (or brake) light VLC transmitter |
|---|---|---|
| Front VLC receiver | Steering radio beam towards oncoming traffic lane | Steering radio beam towards upfront vehicles driving in the same direction |
| Rear VLC receiver | Steering radio beam towards backwards vehicles driving in the same direction | Steering radio beam towards backwards vehicles driving in opposite direction |

A radio link benefits from the phase adjustments of the antenna array starting with the connection establishment and continuing through the whole communication until the radio connection is terminated.

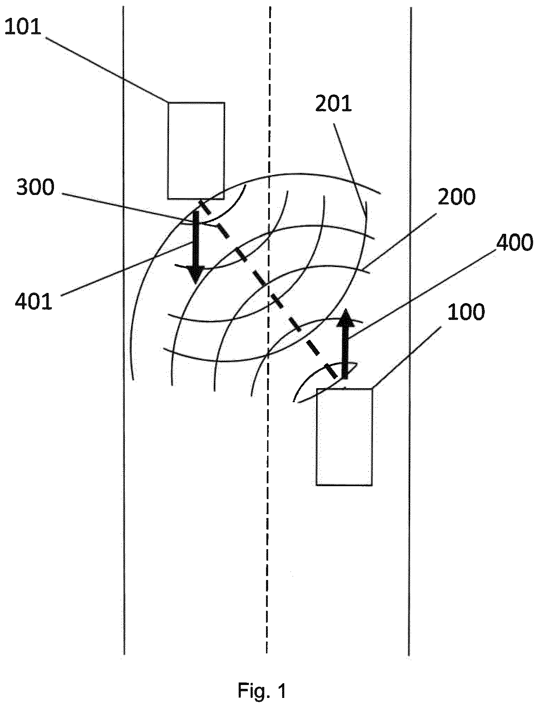

Referring to Fig. 1, there is shown a first vehicle 100 and a second vehicle 101, each travelling in a respective direction shown by arrows 400 and 401. Through exchange of VLC signals 300, vehicle 100 is able to steer radio transmissions 200 towards vehicle 101 and vehicle 101 is able to steer radio transmissions 201 towards vehicle 100.

Alternatively, the VLC signals may be used to transmit detailed geographic information (coordinates) of the respective peer entity, such as its latitude/longitude/altitude, or simplified location information, such as a lane number. These types of location data may indicate the sending device's absolute position as well as its relative position that may be used for radio connection establishment, e.g. for beam forming or setting the initial transmit power.

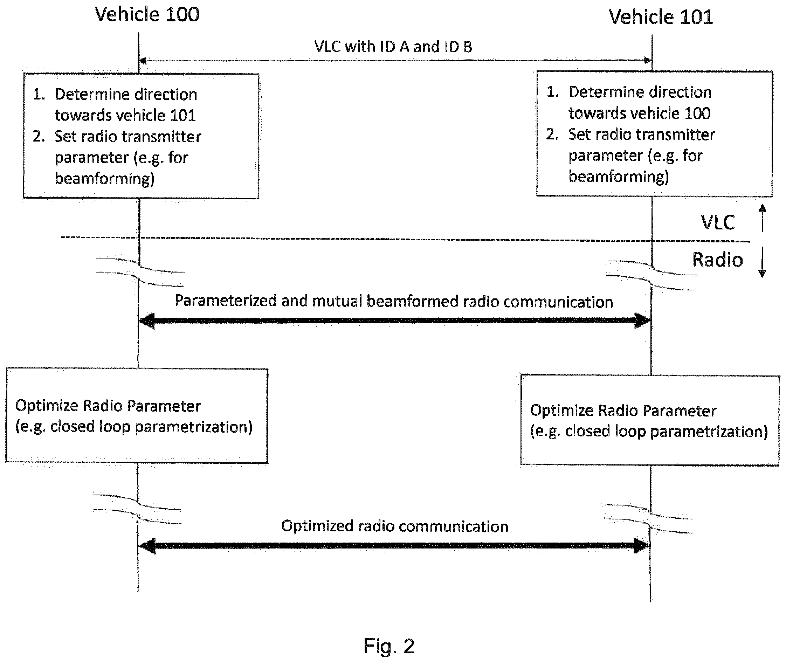

A possible message sequence chart for this embodiment is shown in Fig. 2.

Vehicle 100 and 101 communicate their IDs via VLC and can derive the direction towards each other from VLC. Radio parameters such as beamforming parameters can be setup before actual radio link communication starts. The link quality could be iterative optimized through parallel VLC or closed loop radio link feedback.

In a second embodiment, VLC is is used to filter relevant information. If applied to car headlights and/or tail (or brake) lights and respective information is transmitted over the VLC connection, a vehicle can be identified as a potential transmitter or a receiver equipped with directive transmit characteristics for radio communication. The combination of directive transmitter and receiver can be used to filter the relevant information. It is beneficial if the VLC sensor is able to distinguish whether the received VLC signal comes from a sender that is ahead of or behind the receiver. The differentiation could be achieved by sending a direction flag (e.g. "1" or white coloured light signals "in driving direction" and "0" or red coloured light "in opposite driving direction") as part of the VLC signal. The colour of light used for VLC may not be suited to distinguish the direction in every scenario, as the example of the yellow light of hazard warning flashers shows. However, in some scenarios the colour of light used for VLC may be well suited to distinguish the nature of the upcoming communication, the type of vehicle, and so on. There are plenty of other information elements that could be used to decide whether additional information to be sent via a wireless radio connection is relevant or not and therefore filter the radio connections setup procedure (or, down selecting the number of potential wireless communication peers). These filter relevant information elements could be sent as payload in the VLC or be signalled via specific signal adaption as for example specific colour, polarization, or intensity of the light (and combinations thereof). As example the usage of blue light could be used as indication that the sending vehicle is an ambulance with exclusive rights. A vehicle could indicate that it has information for oncoming traffic by modulating a corresponding VLC signal on its head lights.

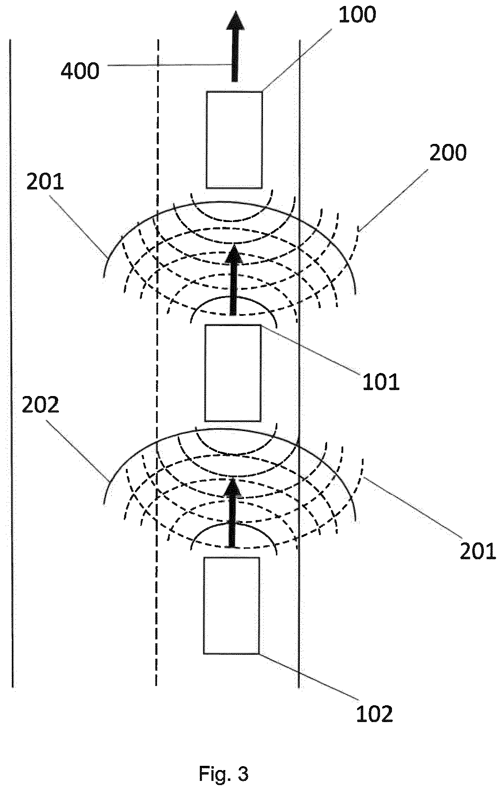

Fig. 3 shows three vehicles 100, 101 and 102. Vehicle 101 receives information via VLC 200 from vehicle 100 via back lights of vehicle 100 and from vehicle 102 via front lights of vehicle 102, VLC 202. After applying filters for relevant communication peers two directional radio communications are setup between vehicle 100 and 101 and vehicle 101 and 102. Which antennas are used for each radio connection is the subject of the first embodiment. The radio connections are also filtered in terms of their content. For example vehicle 101 only listens to the radio link with vehicle 100 in order to indicate e.g. an emergency brake signal received from the driving ahead vehicle 100 to the driver. In case vehicle 101 performs an emergency brake itself this signal is sent only via the radio link to a vehicle driving behind, vehicle 102.

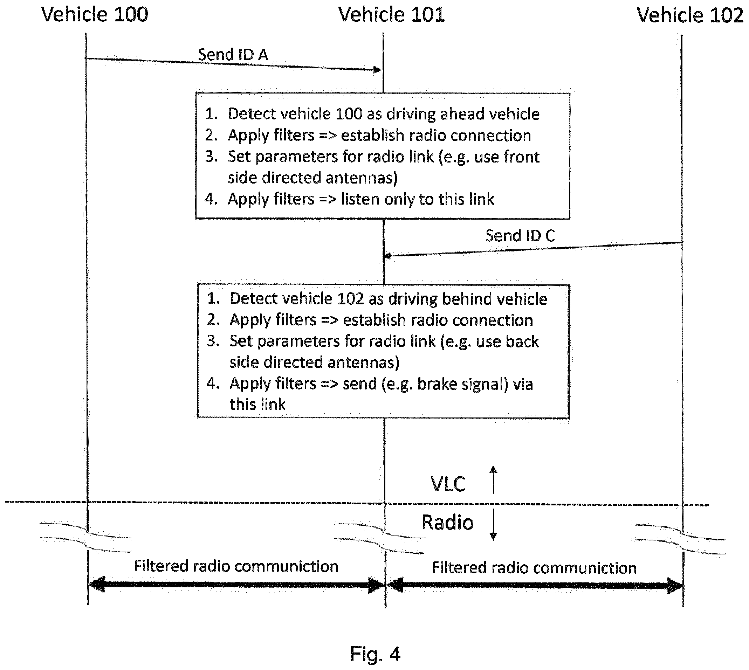

Fig. 4 shows a message sequence chart for the scenario of Fig. 3 assuming vehicle IDs being transmitted via the VLC links from vehicles 100 and 102 (ID A and ID C respectively).

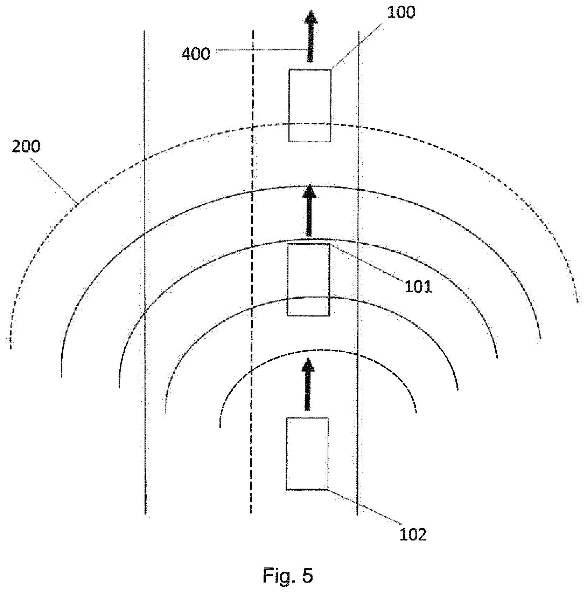

An alternative scenario for filtered communications is shown in Fig. 5. An ambulance (here vehicle 102) is signalling it has special rights via VLC 200. For example blue light could be used that is (in Europe) restricted to vehicles with special rights. The top mounted blue lights of the ambulance can be seen (and received) by several driving ahead vehicles. Since the VLC implies the direction of the signal the drivers of vehicle 100 and 101 can be warned or informed of the ambulance approaching from their rear. There are several other parameters of VLC that could be used to established a filtered radio connection. Such parameters are - non-exhaustively - polarization, colour, intensity, or flash / black-out frequency.

A third embodiment of the present invention relates to performing a pre-authentication prior to establishing a radio connection. Considering that there is only a short timeframe for transferring data in a V2V connection between oncoming traffic, it is beneficial to minimize the time needed for the connection setup procedure or at least avoid to waste resources by establishing connections to vehicles not carrying any relevant information. In particular, authentication as well as authorization consumes time and other resources during connection setup. Each communication entity has to authenticate itself towards each other. In case the communicating entities have no shared secret in common at least the procedures for authentication and secure connection setup would have to rely on asymmetric cryptography. Unfortunately, asymmetric cryptography leads to long keys, long certificates and resource consuming processing.

The length of an ASN.1 coded X.509 certificate depends mainly from the length of the public key (typical RSA key length is 2048 bit). With elliptic curves based cryptography the key length is decreased to typically 224 bits. In wireless radio communication a secure connection setup has to be performed before entities can securely communicate with each other. Only after the connection setup procedure has been performed successfully an entity is able to decide whether other communication entities are authorized to communicate and whether they have relevant information to send at all. It is therefore beneficial to use VLC in parallel with the secure connection setup of the wireless radio. It is also possible to perform a mutual authentication via VLC first and store the security context in order to perform a fast radio connection setup in that point of time when it is needed.

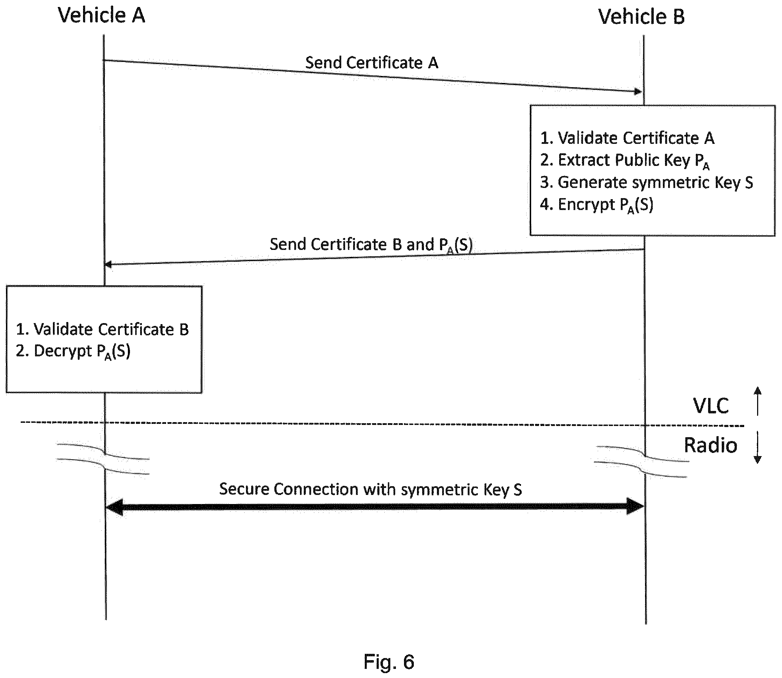

An example is shown in Fig. 6. The figure shows a first vehicle (vehicle A) that sends a digital certificate modulated on its tail/brake lights. A second vehicle (vehicle B) running behind the first one receives the certificate via a VLC sensor in driving direction, verifies the certificate, extracts the public key P_{A}, and establish a security context by generating a symmetric session key S, encrypt it with the public key of vehicle A P_{A} and send it together with the own certificate via VLC to vehicle A. In parallel or at a later point of time a secure radio connection between vehicle A and B can be established fast, because vehicle A and B have already a shared secret / symmetric session key S.

It will be clear to the reader that the above three embodiments of the invention may be combined in any combination.

While the term visual light communication has been used to describe the above embodiments, it should be understood that electromagnetic radiation in a non-visible part of the spectrum may be used to transmit signals. For example, infra-red radiation could be used.

## Claims

1. A method of establishing a radio communication connection between a first device (100) and a second device (101), wherein the method comprises the first device transmitting an optical signal (300) including radio communication parameters and the second device deriving said communication parameters from said optical signal, **characterized in that** the second device additionally derives directional information from said optical signal, the directional information being used to generate parameters to control a directional radio communication between the first device and the second device.

2. The method according to claim 1, wherein the directional information is used to control a directional radio antenna element so as to steer a transmission direction towards the first device.

3. The method according to claim 1 or claim 2, wherein the directional information is obtained by analysing a received signal from a directional optical receiver.

4. The method according to any preceding claim, wherein the directional information is obtained by analysing data transmitted by the optical signal.

5. The method according to any preceding claim, wherein at least the second device is associated with a vehicle.

6. The method according to any preceding claim, wherein the first device and the second device are associated with respective vehicles.

7. The method according to any preceding claim, wherein the optical signal is used to exchange authentication data between the first and second devices.

8. The method according to any preceding claim, wherein the second device transmits an optical signal to the first device and the first device derives directional information from a received optical signal from the second device to generate parameters to control the directional radio communication between the first device and the second device.

9. The method according to any preceding claim, wherein the directional information is used to filter information transmitted using the radio communication.

10. The method according to any one of claims 1 to 9, wherein the optical signals include authentication information and wherein a secure radio connection is established using the authentication information.

11. The method of claim 10, wherein the first device transmits a digital certificate to the second device using an optical signal, the second device receives and verifies the digital certificate, extracts a public key, generates a symmetric session key, encrypts the symmetric session key with the public key and transmits this encrypted symmetric session key with its own digital certificate to the first device using an optical signal.

12. A vehicle (100; 101) including an optical signal receiving device and a radio communication user equipment device, wherein the optical signal receiving device is arranged to receive a transmitted optical signal (300) including radio communication parameters, **characterized in that** the optical signal receiving device is further arranged to derive directional information from the received optical signal, and the vehicle is arranged to use the directional information to generate parameters to control a directional radio communication between the vehicle and a device transmitting the optical signal.

## Patentansprüche

1. Verfahren zum Herstellen einer Funkkommunikationsverbindung zwischen einer ersten Vorrichtung (100) und einer zweiten Vorrichtung (101), wobei das Verfahren umfasst, dass die erste Vorrichtung ein optisches Signal (300) einschließlich Funkkommunikationsparametern sendet und die zweite Vorrichtung die Kommunikationsparameter von dem optischen Signal ableitet, **dadurch gekennzeichnet, dass** die zweite Vorrichtung zusätzlich Richtungsinformationen aus dem optischen Signal ableitet, wobei die Richtungsinformationen verwendet werden, um Parameter zum Steuern einer Richtungsfunkkommunikation zwischen der ersten Vorrichtung und der zweiten Vorrichtung zu erzeugen.

2. Verfahren nach Anspruch 1, wobei die Richtungsinformationen verwendet werden, um ein Richtfunkantennenelement zu steuern, um eine Übertragungsrichtung hin zu der ersten Vorrichtung zu lenken.

3. Verfahren nach Anspruch 1 oder 2, wobei die Richtungsinformationen durch Analysieren eines empfangenen Signals von einem optischen Richtungsempfänger erhalten werden.

4. Verfahren nach einem der vorhergehenden Ansprüche, wobei die Richtungsinformationen durch Analysieren von Daten erhalten werden, die von dem optischen Signal übertragen werden.

5. Verfahren nach einem der vorhergehenden Ansprüche, wobei mindestens die zweite Vorrichtung einem Fahrzeug zugeordnet ist.

6. Verfahren nach einem der vorhergehenden Ansprüche, wobei die erste Vorrichtung und die zweite Vorrichtung jeweiligen Fahrzeugen zugeordnet sind.

7. Verfahren nach einem der vorhergehenden Ansprüche, wobei das optische Signal verwendet wird, um Authentifizierungsdaten zwischen der ersten und der zweiten Vorrichtung auszutauschen.

8. Verfahren nach einem der vorhergehenden Ansprüche, wobei die zweite Vorrichtung ein optisches Signal an die erste Vorrichtung überträgt und die erste Vorrichtung Richtungsinformationen aus einem von der zweiten Vorrichtung empfangenen optischen Signal ableitet, um Parameter zum Steuern der Richtungsfunkkommunikation zwischen der ersten Vorrichtung und der zweiten Vorrichtung zu erzeugen.

9. Verfahren nach einem der vorhergehenden Ansprüche, wobei die Richtungsinformationen verwendet werden, um die unter Verwendung der Funkkommunikation übertragenen Informationen zu filtern.

10. Verfahren nach einem der Ansprüche 1 bis 9, wobei die optischen Signale Authentifizierungsinformationen enthalten und wobei eine sichere Funkverbindung unter Verwendung der Authentifizierungsinformationen hergestellt wird.

11. Verfahren nach Anspruch 10, wobei die erste Vorrichtung ein digitales Zertifikat unter Verwendung eines optischen Signals an die zweite Vorrichtung überträgt, die zweite Vorrichtung das digitale Zertifikat empfängt und überprüft, einen öffentlichen Schlüssel extrahiert, einen symmetrischen Sitzungsschlüssel erzeugt, den symmetrischen Sitzungsschlüssel mit dem öffentlichen Schlüssel verschlüsselt und diesen verschlüsselten symmetrischen Sitzungsschlüssel mit seinem eigenen digitalen Zertifikat unter Verwendung eines optischen Signals an die erste Vorrichtung überträgt.

12. Fahrzeug (100; 101), das eine Empfangsvorrichtung für optische Signale und ein Funkkommunikationsbenutzergerät enthält, wobei die Empfangsvorrichtung für optische Signale dazu vorgesehen ist, ein übertragenes optisches Signal (300) einschließlich Funkkommunikationsparametern zu empfangen, **dadurch gekennzeichnet, dass** die Empfangsvorrichtung für optische Signal ferner dazu vorgesehen ist, Richtungsinformationen aus dem empfangenen optischen Signal abzuleiten, und das Fahrzeug dazu vorgesehen ist, die Richtungsinformationen zu verwenden, um Parameter zum Steuern einer Richtungsfunkkommunikation zwischen dem Fahrzeug und einer Vorrichtung zu erzeugen, die das optische Signal überträgt.

## Revendications

1. Procédé d'établissement d'une connexion de communication radio entre un premier dispositif (100) et un deuxième dispositif (101), le procédé comprenant la transmission, par le premier dispositif, d'un signal optique (300) comportant des paramètres de communication radio et l'obtention, par le deuxième dispositif, des paramètres de transmission à partir dudit signal optique, **caractérisé en ce que** le deuxième dispositif obtient additionnellement des informations de direction à partir dudit signal optique, les informations de direction servant à générer des paramètres permettant de commander une communication radio directionnelle entre le premier dispositif et le deuxième dispositif.

2. Procédé selon la revendication 1, dans lequel les informations de direction servent à commander un élément d'antenne radio directionnelle de manière à orienter une direction de transmission vers le premier dispositif.

3. Procédé selon la revendication 1 ou la revendication 2, dans lequel les informations de direction sont acquises par analyse d'un signal reçu depuis un récepteur optique directionnel.

4. Procédé selon l'une quelconque des revendications précédentes, dans lequel les informations de direction sont acquises par analyse de données transmises par le signal optique.

5. Procédé selon l'une quelconque des revendications précédentes, dans lequel au moins le deuxième dispositif est associé à un véhicule.

6. Procédé selon l'une quelconque des revendications précédentes, dans lequel le premier dispositif et le deuxième dispositif sont associés à des véhicules respectifs.

7. Procédé selon l'une quelconque des revendications précédentes, dans lequel le signal optique est utilisé pour échanger des données d'authentification entre les premier et deuxième dispositifs.

8. Procédé selon l'une quelconque des revendications précédentes, dans lequel le deuxième dispositif transmet un signal optique au premier dispositif et le premier dispositif obtient des informations de direction à partir d'un signal optique reçu depuis le deuxième dispositif pour générer des paramètres permettant de commander la communication radio directionnelle entre le premier dispositif et le deuxième dispositif.

9. Procédé selon l'une quelconque des revendications précédentes, dans lequel les informations de direction sont utilisées pour filtrer des informations transmises au moyen de la communication radio.

10. Procédé selon l'une quelconque des revendications 1 à 9, dans lequel les signaux optiques comportant des informations d'authentification, et dans lequel une connexion radio sécurisée est établie au moyen des informations d'authentification.

11. Procédé selon la revendication 10, dans lequel le premier dispositif transmet un certificat numérique au deuxième dispositif au moyen d'un signal optique, le deuxième dispositif reçoit et vérifie le certificat numérique, extrait une clé publique, génère une clé de session symétrique, chiffre la clé de session symétrique avec la clé publique et transmet cette clé de session symétrique chiffrée avec son propre certificat numérique au premier dispositif au moyen d'un signal optique.

12. Véhicule (100 ; 101) comportant un dispositif de réception de signal optique et un dispositif équipement utilisateur de communication radio, le dispositif de réception de signal optique étant conçu pour recevoir un signal optique transmis (300) comportant des paramètres de communication radio, **caractérisé en ce que** le dispositif de réception de signal optique est conçu en outre pour obtenir des informations de direction à partir du signal optique reçu, et le véhicule est conçu pour utiliser les informations de direction pour générer des paramètres permettant de commander une communication radio directionnelle entre le véhicule et un dispositif transmettant le signal optique.
